(19) Europäisches Patentamt
European Patent Office
Office européen des brevets

(11) EP 3 231 830 A1

(12) # EUROPEAN PATENT APPLICATION
published in accordance with Art. 153(4) EPC

(43) Date of publication:
**18.10.2017 Bulletin 2017/42**

(21) Application number: **14907662.2**

(22) Date of filing: **10.12.2014**

(51) Int Cl.:
***C08G 63/16*** (2006.01) ***C08G 63/40*** (2006.01)
***C08G 63/91*** (2006.01) ***C08J 9/00*** (2006.01)
***C08G 101/00*** (2006.01)

(86) International application number:
**PCT/KR2014/012166**

(87) International publication number:
**WO 2016/093395 (16.06.2016 Gazette 2016/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **LOTTE Fine Chemical Co., Ltd.**
**Ulsan, 44714 (KR)**

(72) Inventors:
- **YEOM, Nam Yeong**
**Daejeon 305-509 (KR)**
- **KIM, Hee Soo**
**Suwon-si**
**Gyeonggi-do 443-280 (KR)**
- **CHOI, Soo Youn**
**Jeonju-si**
**Jeollabuk-do 560-896 (KR)**

(74) Representative: **Kador & Partner**
**Corneliusstraße 15**
**80469 München (DE)**

(54) **BIODEGRADABLE POLYESTER RESIN AND FOAM OBTAINED THEREFROM**

(57) Disclosed are a biodegradable polyester resin and a foam obtained therefrom. The disclosed biodegradable polyester resin comprises: a dicarboxylic acid residue; a diol residue; and a residue derived from a tetra- or higher functional branching agent, and thus the biodegradable polyester resin has an improved melt viscosity and an improved foaming ratio.



Printed by Jouve, 75001 PARIS (FR)

**Description**

TECHNICAL FIELD

The present invention relates to a biodegradable polyester resin and a foam obtained therefrom, and more particularly, to a biodegradable polyester resin and a foam obtained therefrom, wherein the biodegradable polyester resin includes a dicarboxylic acid residue; a diol residue; and a residue derived from a tetra- or higher functional branching agent, and thus has an improved melt viscosity and an improved foaming ratio.

BACKGROUND ART

Plastic foamed articles have advantages in respect of their lightweight, cushioning, insulating, and molding properties, and thus, plastic foamed articles have mainly been used in packaging containers or cushioning materials. Plastic foamed articles, such as polystyrene or polyolefin, have problems as they are slowly degraded by microorganisms when reclaimed, or generate hazardous gas or cause deterioration of an incinerator when incinerated.

Recently, to solve such problems above, there is a need for plastic foamed articles made of biodegradable resins that can be degraded by microorganisms. In particular, foamed articles made of biodegradable polyester resins have received attention. Since the biodegradable polyester resins can be degraded by microorganisms present in nature, such as bacteria, algae, and fungi, into water and carbon dioxide or into water and methane gas, the problems above can be solved in terms of environmental aspects. However, when subjected to foaming, the conventional biodegradable polyester resins still have a problem of a low foaming ratio thereof.

DETAILED DESCRIPTION OF THE INVENTION

TECHNICAL PROBLEM

An example embodiment of the present invention provides a biodegradable polyester resin including a dicarboxylic acid residue; a diol residue; and a residue derived from a tetra- or higher functional branching agent.

Another example embodiment of the present invention provides a foam obtained from the biodegradable polyester resin.

TECHNICAL SOLUTION

According to one aspect of the present invention, provided is a biodegradable polyester resin including a dicarboxylic acid residue, a diol residue, and a residue derived from a tetra- or higher functional branching agent.

The dicarboxylic acid residue may include a residue derived from at least one dicarboxylic acid compound selected from the group consisting of a substituted or unsubstituted $C_4$-$C_{10}$ aliphatic dicarboxylic acid, a derivative of the aliphatic dicarboxylic acid, a substituted or unsubstituted $C_8$-$C_{20}$ aromatic dicarboxylic acid, and a derivative of the aromatic dicarboxylic acid.

The diol residue may include a residue derived from at least one diol compound selected from the group consisting of a substituted or unsubstituted $C_2$-$C_{10}$ aliphatic diol and a substituted or unsubstituted $C_6$-$C_{20}$ aromatic diol.

An amount of the diol residue may be in a range of about 1 part by mol to about 2 parts by mol based on 1 part by mol of the dicarboxylic acid residue.

The branching agent may have at least one functional group selected from an acid anhydride group (-(O=)COC(=O)-), a hydroxyl group, a carboxyl group, an amine group, an isocyanate group, an epoxide group, and a haloformyl group.

The branching agent may include at least one compound represented by Formula 1.

Formula 1

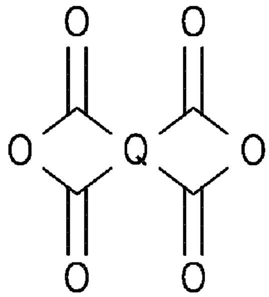

In Formula 1, Q may be a substituted or unsubstituted $C_6$-$C_{18}$ aromatic moiety or a moiety represented by Formula 2.

Formula 2

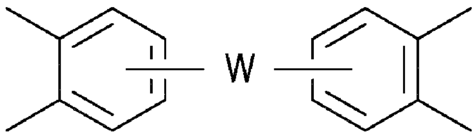

In Formula 2, W may be a divalent group that is selected from -O-, -C(=O)-, -S-, $-C(CF_3)_2-$, $-C_nH_{2n}-$, $-SO_2-$, -NHCO-, or $-SiR_2-$, the divalent group may be located at a 2,2', 2,3', or 3,3' position of an aromatic ring, n may be an integer of 1 to 5, and R may be a linear, branched, or cyclic alkyl group having 1 to 8 carbon atoms.

An amount of the residue derived from the branching agent may be in a range of about 0.0014 part by mol to about 0.0046 part by mol based on 1 part by mol of the dicarboxylic acid residue.

The biodegradable polyester resin may have a number average molecular weight (Mn) in a range of about 40,000 to about 80,000, a weight average molecular weight (Mw) in a range of about 130,000 to about 250,000, and a Z-average molecular weight (Mz) in a range of about 260,000 to about 1,100,000.

The biodegradable polyester resin may have a melt viscosity in a range of about 1,000 Pa·s to about 9,000 Pa·s when the melt viscosity is measured at a temperature of 160°C, a strain of 10%, and a frequency of 0.1 Hz by using an Advanced Rheometric Expansion System (ARES).

The biodegradable polyester resin may have a storage modulus in a range of about 10 Pa to about 2,200 Pa when the storage modulus is measured at a temperature of 160°C, a strain of 10%, and a frequency of 0.1 Hz by using the ARES.

The biodegradable polyester resin may have a polydispersity index in a range of about 2.4 to about 5.0 when the polydispersity index is measured by using gel permeation chromatography (GPC).

The biodegradable polyester resin may have a foaming ratio in a range of 3 to 20 when extrusion foaming is performed thereon.

According to another aspect of the present invention, provided is a foam obtained from the biodegradable polyester resin.

## ADVANTAGEOUS EFFECTS OF THE INVENTION

According to an example embodiment of the present invention, there is provided a biodegradable polyester resin having an improved melt viscosity and an improved foaming ratio due to including a dicarboxylic acid residue; a diol residue; and a residue derived from a tetra- or higher functional branching agent. Also, according to an additional example embodiment of the present invention, there is provided a biodegradable polyester resin having a high storage modulus.

According to another example embodiment of the present invention, there is provided a foam obtained from the biodegradable polyester resin.

## BEST MODE

Hereinafter, a biodegradable polyester resin according to an example embodiment of the present invention will

be described in detail.

As used herein, the term "polyester" refers to a synthetic polymer prepared by an esterification reaction and a polycondensation reaction between at least one difunctional carboxylic acid or three or more multi-functional carboxylic acids and at least one difunctional hydroxyl compound or three or more multi-functional hydroxyl compounds.

As used herein, the term "residue" refers to a certain part or unit derived from a particular compound and included in the resultant of a chemical reaction when the particular compound participates in the chemical reaction.

As used herein, the term "dicarboxylic acid derivative" refers to a compound including an ester derivative, an acyl halide derivative, or an anhydride derivative of a dicarboxylic acid.

As used herein, the term "foam cell" refers to a fine structure that is expanded by foaming in a polymer.

According to an embodiment of the present invention, a biodegradable polyester resin includes a dicarboxylic acid residue; a diol residue; and a residue derived from a tetra- or higher functional branching agent.

The dicarboxylic acid residue may include a residue derived from at least one dicarboxylic acid compound selected from the group consisting of a substituted or unsubstituted $C_4$-$C_{10}$ aliphatic dicarboxylic acid, a derivative of the aliphatic dicarboxylic acid, a substituted or unsubstituted $C_8$-$C_{20}$ aromatic dicarboxylic acid, and a derivative of the aromatic dicarboxylic acid.

For example, the dicarboxylic acid residue may include at least one residue derived from at least one compound selected from the group consisting of an aliphatic dicarboxylic acid, such as malonic acid, succinic acid, glutaric acid, 2-methylglutaric acid, 3-methylglutaric acid, adipic acid, pimelic acid, azelaic acid, sebacic acid, undecanedioic acid, dodecanedioic acid, brassylic acid, tetradecanedioic acid, fumaric acid, 2,2-dimethylglutaric acid, suberic acid, maleic acid, itaconic acid, or a combination thereof, or a derivative thereof; and an aromatic dicarboxylic acid, such as terephthalic acid, isophthalic acid, 2,6-naphthoic acid, 1,5-naphthoic acid, or a combination thereof, or a derivative thereof.

The diol residue may include a residue derived from at least one diol compound selected from the group consisting of a substituted or unsubstituted $C_2$-$C_{10}$ aliphatic diol and a substituted or unsubstituted $C_6$-$C_{20}$ aromatic diol.

For example, the diol residue may include a residue derived from at least one compound selected from the group consisting of aliphatic diols including ethanediol, 1,2-propanediol, 1,3-propanediol, 1,2-butanediol, 1,4-butanediol, 1,5-pentanediol, 1,6-hexanediol, 2,4-dimethyl-2-ethyl-1,3-hexanediol, 2,2-dimethyl-1,3-propanediol, 2-ethyl-2-butyl-1,3-propanediol, 2-ethyl-2-isobutyl-1,3-propanediol, 2,2,4-trimethyl-1,6-hexanediol, and a combination thereof; and aromatic diols including 1,2-benzenediol, 1,3-benzenediol, 1,4-benzenediol, 1,3-naphthalenediol, 1,4-naphthalenediol, 1,7-naphthalenediol, 2,3-naphthalenediol, 2,6-naphthalenediol, 2,7-naphthalenediol, and a combination thereof.

An amount of the diol residue may be in a range of about 1 part by mol to about 2 parts by mol based on 1 part by mol of the dicarboxylic acid residue.

The dicarboxylic acid and the diol may react at a molar ratio of 1:1 when they are reacted at a stoichiometric ratio during polymerization for preparation of the biodegradable polyester resin. The molar ratio of an amount of the diol to an amount of the dicarboxylic acid may be 1:1, but the amount of the diol may be greater than the amount of the dicarboxylic acid, in order to accelerate the reaction and increase a yield.

The branching agent may have at least one functional group selected from the group consisting of an acid anhydride group ((-(O=)COC(=O)-), a hydroxyl group, a carboxyl group, an amine group, an isocyanate group, an epoxide group, and a halo formyl group.

For example, the branching agent may be a pentaerythritol having four hydroxyl groups.

When a difunctional or trifunctional compound is used as the branching agent, a melt viscosity and a foaming ratio are low, and thus a biodegradable polyester resin not appropriate for forming foam may be obtained.

The branching agent may include at least one compound represented by Formula 1.

Formula 1

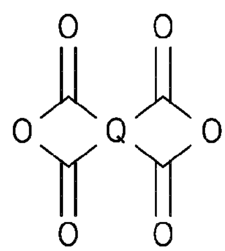

In Formula 1, Q is a substituted or unsubstituted $C_6$-$C_{18}$ aromatic moiety or a moiety represented by Formula 2.

Formula 2

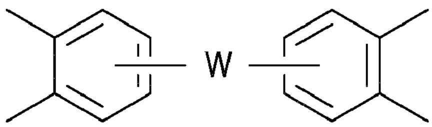

In Formula 2, W is a divalent group selected from -O-, -C(=O)-, -S-, $-C(CF_3)_2-$, $-C_nH_{2n}-$, $-SO_2-$, -NHCO-, and $-SiR_2-$; the divalent group is located at a 2,2', 2,3', or 3,3' position of an aromatic ring; n is an integer of 1 to 5; and R is a linear, branched, or cyclic alkyl group having 1 to 8 carbon atoms.

In Formula 2, each of four straight lines connected to the aromatic ring indicates that the aromatic ring is bonded to a carbonyl carbon, i.e., a carbon included in a carbonyl group (-C=O) in Formula 1, and -W- that penetrates the aromatic ring indicates that -W- may be bonded to a 2,2', 2,3', or 3,3' position of the ring penetrated by -W-.

For example, Q may be selected from substituted or unsubstituted $C_6$-$C_{18}$ aromatic moieties represented by structures below, but embodiments are not limited thereto.

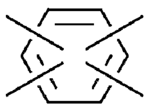
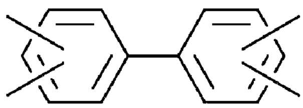
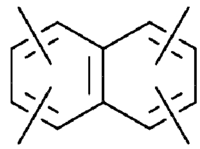

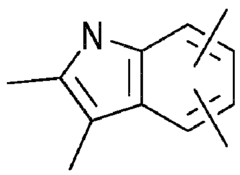
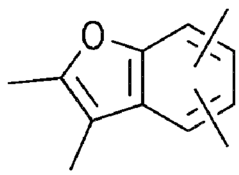
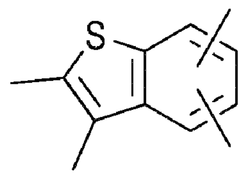

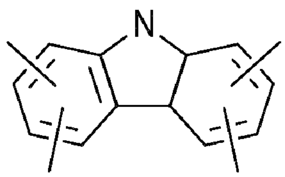
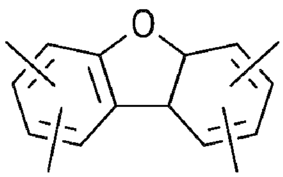
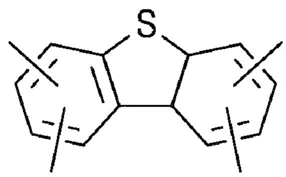

In the structure, a straight line penetrating the ring indicates that a carbonyl carbon in Formula 1 may be bonded to an arbitrary position of the ring through which the straight line penetrates.

As used herein, the term "substituted compound or moiety" refers to a compound or moiety prepared by substituting at least one hydrogen atom of an unsubstituted compound or moiety with, for example, a $C_1$-$C_{10}$ alkyl group, a $C_2$-$C_{10}$ alkenyl group, a $C_2$-$C_{10}$ alkynyl group, a $C_6$-$C_{12}$ aryl group, a $C_2$-$C_{12}$ heteroaryl group, a $C_6$-$C_{12}$ arylalkyl group, a halogen atom, a cyano group, an amino group, an amidino group, a nitro group, an amide group, a carbonyl group, a hydroxyl group, a sulfonyl group, a carbamate group, or a $C_1$-$C_{10}$ alkoxy group.

For example, the compound represented by Formula 1 may be 1,2,3,4-benzenetetracarboxylic acid dianhydride, 1,2,4,5-benzenetetracarboxylic acid dianhydride (i.e., pyromellitic dianhydride (PMDA)), 3,3',4,4'-biphenyltetracarboxylic acid dianhydride, 2,3,3',4'-biphenyltetracarboxylic acid dianhydride, 2,2',3,3'-biphenyltetracarboxylic acid dianhydride, 2,3,6,7-naphthalenetetracarboxylic acid dianhydride, 1,4,5,7-naphthalenetetracarboxylic acid dianhydride, 1,4,5,6-naphthalenetetracarboxylic acid dianhydride, 1,2,4,5-naphthalenetetracarboxylic acid dianhydride, or 1,4,5,8-naphthalenetetracarboxylic acid dianhydride.

In particular, the compound represented by Formula 1 including a moiety represented by Formula 2 may be, for example, 3,3',4,4'-diphenylsulfidetetracarboxylic acid dianhydride, 3,3',4,4'-diphenylsulfonatetetracarboxylic acid dianhydride, 3,3',4,4'-benzophenon tetracarboxylic acid dianhydride, 2,3,3',4'-benzophenontetracarboxylic acid dianhydride, 3,3',4,4'-diphenylmethanetetracarboxylic acid dianhydride, 2,3',3,3'-diphenylmethanetetracarboxylic acid dianhydride, 3,3',4,4'-diphenyloxidetetracarboxylic acid dianhydride, 1,1-bis(2,3-dicarboxyphenyl)ethane dianhydride, 1,1-bis(3,4-dicarboxyphenyl)ethane dianhydride, 2,2-bis(3,4-dicarboxyphenyl)propane dianhydride, 2,2-bis(2,3-dicarboxyphenyl)propane dianhydride, or 2,2-bis(3,4-dicarboxyphenyl)hexafluoropropane dianhydride.

When the branching agent is the compound represented by Formula 1, due to high reactivity of an acid anhydride

group (-(O=)COC(=O)-), a time for preparing the biodegradable polyester resin may be significantly reduced compared to that of a case when the branching agent includes a hydroxyl group, a carboxyl group, an amine group, an isocyanate group, an epoxide group, and/or a halo formyl group, as will be described.

An amount of the residue derived from the branching agent may be in a range of about 0.0014 parts by mol to about 0.0046 parts by mol based on 1 part by mol of the dicarboxylic acid residue.

When an amount of the residue derived from the branching agent is within this range, a reaction time for polymerization to prepare the biodegradable polyester resin may be reduced, and a biodegradable polyester resin having an improved melt viscosity may be obtained.

The biodegradable polyester resin may have a number average molecular weight (Mn) in a range of about 40,000 to about 80,000, a weight average molecular weight (Mw) in a range of about 130,000 to about 250,000, and a Z-average molecular weight (Mz) in a range of about 260,000 to about 1,100,000.

When a number average molecular weight (Mn), a weight average molecular weight (Mw), and a Z-average molecular weight (Mz) of the biodegradable polyester resin are respectively within these ranges, the biodegradable polyester resin may have a melt viscosity that is preferable for growth of initial foam cells during foaming, and thus a foaming ratio of the biodegradable polyester resin may improve.

The biodegradable polyester resin may have a melt index (MI) in a range of about 1g/10min to about 10g/10min when the MI is measured at a temperature of 190°C, and a load of 2.16 kg according to the ASTM D1238. When an MI of the biodegradable polyester resin is within this range, foam cells may be easily formed, and the foam cells may not easily collapse.

The biodegradable polyester resin may have a melt viscosity in a range of about 1,000 Pa·s to about 9,000 Pa·s when the melt viscosity is measured using an Advanced Rheometric Expansion System (ARES) at a temperature of 160°C, a strain of 10%, and a frequency of 0.1 Hz. When a melt viscosity of the biodegradable polyester resin is within this range, foam cells may be easily formed, and the foam cells may not easily collapse.

The biodegradable polyester resin may have a storage modulus in a range of about 10 Pa to about 2,200 Pa when the storage modulus is measured using the ARES at a temperature of 160°C, a strain of 10%, and a frequency of 0.1 Hz. When a storage modulus of the biodegradable polyester resin is within this range, initial foam cells may be easily formed during foaming, and thus a foaming ratio of the biodegradable polyester resin may improve.

The biodegradable polyester resin may have a polydispersity index in a range of about 2.4 to about 5.0 when the polydispersity index is measured by using gel permeation chromatography (GPC). When a polydispersity index of the biodegradable polyester resin is within this range, foam cells may be uniform in size, and a biodegradable polyester resin having excellent processability may be obtained.

The biodegradable polyester resin may have a foaming ratio in a range of 3 to 20 when extrusion foaming is performed thereon.

As used herein, when the biodegradable polyester resin is foamed, the term "foaming ratio" refers to a ratio of a bulk density of the biodegradable polyester resin before foaming to a bulk density of the biodegradable polyester resin after foaming.

According to another embodiment of the present invention, there is provided a foam obtained from the biodegradable polyester resin. The foam may be obtained by foaming and selectively molding the biodegradable polyester resin. The foam obtained from the biodegradable polyester resin may be, for example, a foaming sheet, a molding vessel, and a packing material.

Hereinafter, a method of preparing the biodegradable polyester resin will be described.

The biodegradable polyester resin may be prepared by performing an esterification reaction and a polycondensation reaction between a dicarboxylic acid and/or a derivative thereof corresponding to the dicarboxylic acid residue; and a diol corresponding to the diol residue.

The esterification reaction may be performed at a temperature in a range of about 180°C to about 200°C and at normal pressure for 90 to 180 minutes. As used herein, the term "normal pressure" refers to a pressure of in a range of 760±1 0 torr.

In the esterification reaction, an amount of the diol compound may be in a range of about 1.0 part by mol to about 2.0 parts by mol based on 1 part by mol of the total amount of the dicarboxylic acid and/or the derivative thereof. When an amount of the diol compound is within this range, the dicarboxylic acid and/or the derivative thereof may be completely reacted in the reaction, depolymerization in which an ester bond is broken by an acidolysis reaction caused by the remaining dicarboxylic acid and/or the derivative thereof may not occur. Also, a problem of increasing a cost due to excessive use of the diol compound may be removed.

In the esterification reaction, when two or more types of the dicarboxylic acid and/or the derivative thereof are used, an amount of the diol compound may be in a range of about 1 part by mol to about 2 parts by mol, or, for example, about 1.3 parts by mol to about 2 parts by mol, based on 1 part by mol of the total amount of the dicarboxylic acid and/or the derivative thereof.

The branching agent may be added to at least one reaction selected from the esterification reaction described

above and the polycondensation reaction described below.

An amount of the branching agent may be in a range of about 0.0014 parts by mol to about 0.0046 parts by mol based on 1 part by mol of an amount of the dicarboxylic acid.

In order to increase a reaction rate by shifting chemical equilibrium in the esterification reaction, alcohol and water produced as by-products, and/or unreacted diol compounds may be discharged to the outside of the reaction system by evaporation or distillation.

In order to promote the esterification reaction, the esterification reaction may be performed in the presence of a catalyst and/or a thermal stabilizer.

Examples of the catalyst may include magnesium acetate, tin(II) acetate, tetra-n-butyl titanate (TBT), lead acetate, sodium acetate, potassium acetate, antimony trioxide, N,N-dimethylaminopyridine, N-methylimidazole, and a combination thereof. When a monomer is added, the catalyst is typically added together with the monomer. An amount of the catalyst may be, for example, in a range of about 0.00001 parts by mol to about 0.2 parts by mol based on 1 part by mol of a total amount of the dicarboxylic acid and/or the derivative thereof used. When an amount of the catalyst is within this range, a reaction time may be reduced, and a desired polymerization degree may be obtained.

The thermal stabilizer may be an organic or inorganic phosphorus compound. Examples of the organic or inorganic phosphorus compound may include phosphoric acid or an organic ester thereof, and phosphorous acid or an organic ester thereof. For example, the thermal stabilizer is commercially available and may be a phosphoric acid, an alkyl phosphate, or an aryl phosphate. For example, the thermal stabilizer may be triphenyl phosphate (TPP). An amount of the thermal stabilizer used when the catalyst is used together with the thermal stabilizer may be, for example, in a range of about 0.00001 parts by mol to about 0.2 parts by mol based on 1 part by mol of a total amount of the dicarboxylic acid and/or the derivative thereof used. When an amount of the thermal stabilizer is within this range, degradation and a change in color of the biodegradable polyester resin may be prevented.

A termination point of the esterification reaction may be determined by measuring an amount of the alcohol or water produced from the reaction as by-products. For example, when 0.4 mol of adipic acid and 0.6 mol of dimethyl terephthalate are respectively used as the dicarboxylic acid and the derivative thereof, and 1.3 mol of butanediol is used as the diol compound, assuming that the whole amounts of the adipic acid and the dimethyl terephthalate react with the butanediol, the esterification reaction may be terminated when 95% or more (i.e., 0.76 mol or more) of 0.8 mol of water and 95% or more (i.e., 1.14 mol or more) of 1.2 mol of methanol, wherein 0.8 mol of water and 1.2 mol of methanol are maximum amounts thereof when produced as by-products, are produced as by-products.

The product (i.e., oligomer) of the esterification reaction may be further polycondensed to have a higher molecular weight. The polycondensation may be performed at a temperature in a range of about 220°C to about 250°C and a pressure of 1 torr or lower for about 80 minutes to about 350 minutes.

When the polycondensation is performed in a vacuum, a biodegradable polyester resin having a high molecular weight may be obtained, while unreacted raw materials (unreacted monomers), low molecular weight oligomers, and water and/or methanol produced as by-products, are removed.

Hereinafter, the present disclosure will be described in detail in connection with the following examples below, but is not limited thereto.

## MODE OF THE INVENTION

### Examples 1 to 8 and Comparative Examples 1 to 4

<Synthesis of biodegradable polyester resin>

(Esterification reaction: ES)

93.20 g (0.48 mol) of dimethyl terephthalate, 117.16 g (1.3 mol) of 1,4-butanediol, 0.3 g (0.8815 mmol) of tetra-n-butyl titanate (TBT), 0.1 g (0.3065 mmol) of triphenyl phosphate (TPP), and a type and an amount of a branching agent shown in Table 1 were added to a 500-ml 3-neck round bottom flask equipped with a condenser, a nitrogen inlet, and a stirrer, to prepare a mixture. Then, a temperature of the mixture was increased up to 195°C, and the mixture was reacted in a nitrogen atmosphere while being stirred until at least 95% (i.e., 36.9 ml) of a theoretical value of methanol was produced, and the methanol produced was then discharged. The methanol thus produced was completely discharged to the outside of the system via the condenser. Then, 75.99 g (0.52 mol) of adipic acid was added to the 3-neck round bottom flask, and the mixture was reacted while being stirred until at least 95% (i.e., 17.8 ml) of a theoretical value of water was produced, and the water produced was then discharged. The water thus produced was discharged to the outside of the 3-neck round bottom flask via the condenser.

(Polycondensation reaction: PC)

Subsequently, a temperature of the 3-neck round bottom flask was increased up to 235°C in a vacuum of 1 torr or lower, and the reaction was allowed to be performed for a time period shown in Table 1, and then the content of the flask was discharged. As a result, a biodegradable polyester(poly(butylene adipate terephthalate (PBAT))) resin was obtained.

Types and amounts of the branching agents used in the Examples and the Comparative Examples, and reaction temperatures and reaction times in the ES and PC reactions are shown in Table 1.

[Table 1]

| | Branching agent | | ES/PC time (min) |
|---|---|---|---|
| | Type | Amount (g(mol)) | |
| Example 1 | Pentaerythritol | 0.50(0.0037) | 180/220 |
| Example 2 | Pyromellitic dianhydride | 0.28(0.0013) | 167/225 |
| Example 3 | Pyromellitic dianhydride | 0.30(0.0014) | 163/215 |
| Example 4 | Pyromellitic dianhydride | 0.37(0.0017) | 155/192 |
| Example 5 | Pyromellitic dianhydride | 0.50(0.0022) | 145/158 |
| Example 6 | Pyromellitic dianhydride | 0.80(0.0037) | 99/111 |
| Example 7 | Pyromellitic dianhydride | 1.00(0.0046) | 105/89 |
| Example 8 | Pyromellitic dianhydride | 1.025(0.0047) | 95/80 |
| Comparative Example 1 | Malic acid | 0.50(0.0037) | 175/194 |
| Comparative Example 2 | Glycerol | 0.35(0.0037) | 165/226 |
| Comparative Example 3 | Trimethylol propane | 0.50(0.0037) | 156/346 |
| Comparative Example 4 | Trimellitic anhydride | 0.70(0.0036) | 135/150 |

<Extrusion foaming of biodegradable polyester resin>

Each of the PBAT resins was fed to a hopper of an extrusion foaming device (PolyLab OS-Foaming Extruder manufactured by Haake), and then, $CO_2$ gas was injected thereto via a $CO_2$ inlet at a rate of 1 ml/min. Here, a pressure of the $CO_2$ gas was about 7,000 psi. The PBAT resin and the $CO_2$ gas were further mixed in a static mixer Die-1 (at a temperature of about 110°C), and then, an extrusion foamed PBAT resin was obtained by discharging the contents of the extrusion foaming device through Die-2 (at a temperature of about 102°C). Here, the rotating speed of a screw was about 40 rpm, and a barrel of the extrusion foaming device included the 4 following regions: an inlet, a section between the inlet and the $CO_2$ inlet, the $CO_2$ inlet, and a section between the $CO_2$ inlet and the Die-1. At each of the regions, temperatures were about 120°C, 150°C, 160°C, and 160°C, respectively.

Evaluation Example

Melt indices (MIs), molecular weights, PDIs, storage moduli, melt viscosities, and foaming ratios of the PBAT resins prepared in Examples 1 to 8 and Comparative Examples 1 to 4 were measured as follows, and the results are shown in Table 2.

<Measurement of melt index (MI)>

Melt indices (MIs) of the PBAT resins of Examples 1 to 8 and Comparative Examples 1 to 4 were measured according to ASTM D1238 at a temperature of 190°C and under a load of 2.16 kg. Specifically, an amount (g) of each of the PBAT resins flowed out through an orifice (having a radius of 2 mm and a length of 8 mm) for 10 minutes was recorded as a melt index. The results are shown in Table 2.

<Measurement of molecular weight and polydispersity index (PDI)>

The PBAT resins of Examples 1 to 8 and Comparative Examples 1 to 4 were diluted with chloroform to a concentration of 1 wt%, and the solutions were analyzed by using GPC to measure number average molecular weights (Mn), weight average molecular weights (Mw), Z-average molecular weights (Mz), and polydispersity indices (PDI) of the PBAT resins, and the results are shown in Table 2. Here, a temperature for the measurement was 35°C, and a flow rate was 1 ml/min.

<Measurement of storage modulus and melt viscosity>

Storage moduli (G') and melt viscosities ($\eta^*$) of the PBAT resins of Examples 1 to 8 and Comparative Examples 1 to 4 were measured by using ARES (ARES G2, available from TA Instruments) at a temperature of 160°C, a strain of 10%, and a frequency of 0.1 Hz, and the results thereof are shown in Table 2.

<Measurement of foaming ratio>

Bulk densities of the PBAT resins of Examples 1 to 8 and Comparative Examples 1 to 4 at states before foaming and after foaming were calculated, and then foaming ratios of the PBAT resins were obtained according to Equation 1. The results are shown in Table 2.

Foaming ratio (times) = A bulk density of a PBAT resin before foaming / a bulk density of a PBAT resin after foaming

[Table 2]

| | MI (g/10min ) | Mn/ Mw/ Mz | PDI | Mz/Mw | G' (Pa) | $\eta^*$ (Pa·s) | Foa min g ratio (tim es) |
|---|---|---|---|---|---|---|---|
| Example 1 | 1.5 | 51,700/224,000/944,000 | 4.33 | 4.21 | 56 | 2100 | 8.5 |
| Example 2 | 6.8 | 56,000/137,000/315,000 | 2.45 | 2.3 | 10 | 1450 | 3.3 |
| Example 3 | 6.0 | 61,200/147,000/353,000 | 2.52 | 2.4 | 12 | 1590 | 3.6 |
| Example 4 | 4.0 | 56,300/152,000/395,200 | 2.70 | 2.60 | 15 | 1750 | 4.1 |
| Example 5 | 3.6 | 58,000/167,000/466,000 | 2.90 | 2.79 | 17.2 | 1938 | 6.6 |
| Example 6 | 3.1 | 43,000/172,000/619,000 | 3.96 | 3.59 | 60 | 2830 | 13.5 |
| Example 7 | 1.2 | 48,600/241,500/1,097,000 | 4.96 | 4.54 | 83 | 3740 | 5.3 |
| Example 8 | 1.4 | 46,200/238,000/1,100,000 | 5.15 | 4.62 | 101 | 4200 | 3.5 |
| Comparative Example 1 | 3.0 | 72,000/171,000/342,000 | 2.38 | 2.0 | 3.5 | 1193 | 1.3 |
| Comparative Example 2 | 5.6 | 64,000/143,000/287,000 | 2.25 | 2.0 | 7.4 | 1100 | 1.8 |
| Comparative Example 3 | 7.3 | 56,300/125,000/248,000 | 2.23 | 1.98 | 2.0 | 989 | 1.1 |
| Comparative Example 4 | 2.2 | 77,400/184,000/374,000 | 2.38 | 2.03 | 8.0 | 1300 | 2.5 |

Referring to Table 2, it was found that the PBAT resins of Examples 1 to 8 had higher melt viscosities ($\eta^*$) and foaming ratios compared to those of the PBAT resins of Comparative Examples 1 to 4. Also, the PBAT resins of Examples 1 to 8 had higher storage moduli (G') compared to those of the PBAT resins of Comparative Examples 1 to 4.

It should be understood that example embodiments described herein should be considered in a descriptive sense only and not for purposes of limitation. Descriptions of features or aspects within each example embodiment

should typically be considered as available for other similar features or aspects in other example embodiments.

While one or more example embodiments have been described with reference to the figures, it will be understood by those of ordinary skill in the art that various changes in form and details may be made therein without departing from the spirit and scope of the inventive concept as defined by the following claims.

## Claims

1. A biodegradable polyester resin comprising:

   a dicarboxylic acid residue;
   a diol residue; and
   a residue derived from a tetra- or higher functional branching agent.

2. The biodegradable polyester resin of claim 1, wherein the dicarboxylic acid residue comprises a residue derived from at least one dicarboxylic acid compound selected from the group consisting of a substituted or unsubstituted $C_4$-$C_{10}$ aliphatic dicarboxylic acid, a derivative of the aliphatic dicarboxylic acid, a substituted or unsubstituted $C_8$-$C_{20}$ aromatic dicarboxylic acid, and a derivative of the aromatic dicarboxylic acid.

3. The biodegradable polyester resin of claim 1, wherein the diol residue comprises a residue derived from at least one diol compound selected from the group consisting of a substituted or unsubstituted $C_2$-$C_{10}$ aliphatic diol and a substituted or unsubstituted $C_6$-$C_{20}$ aromatic diol.

4. The biodegradable polyester resin of claim 1, wherein an amount of the diol residue is in a range of about 1 part by mol to about 2 parts by mol based on 1 part by mol of the dicarboxylic acid residue.

5. The biodegradable polyester resin of claim 1, wherein the branching agent has at least one functional group selected from an acid anhydride group ((-(O=)COC(=O)-), a hydroxyl group, a carboxyl group, an amine group, an isocyanate group, an epoxy group, and a halo formyl group.

6. The biodegradable polyester resin of claim 1, wherein the branching agent comprises at least one compound represented by Formula 1:

   Formula 1

   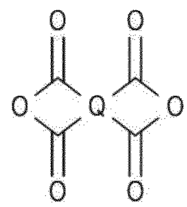

   wherein, in Formula 1, Q is a substituted or unsubstituted $C_6$-$C_{18}$ aromatic moiety or a moiety represented by Formula 2:

   Formula 2

   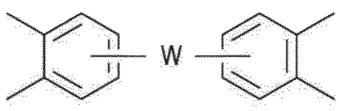

   wherein, in Formula 2, W is a divalent group that is -O-, -C(=O)-, -S-, $-C(CF_3)_2-$, $-C_nH_{2n}-$, $-SO_2-$, -NHCO-, or $-SiR_2-$, the divalent group is located at a 2,2', 2,3', or 3,3' position of an aromatic ring, n is an integer of 1 to 5, and R is a linear, branched, or cyclic alkyl group having 1 to 8 carbon atoms.

7. The biodegradable polyester resin of claim 1, wherein an amount of the residue derived from the branching agent is in a range of about 0.0014 parts by mol to about 0.0046 parts by mol based on 1 part by mol of the dicarboxylic

acid residue.

8. The biodegradable polyester resin of claim 1 having a number average molecular weight (Mn) in a range of about 40,000 to about 80,000, a weight average molecular weight (Mw) in a range of about 130,000 to about 250,000, and a Z-average molecular weight (Mz) in a range of about 260,000 to about 1,100,000.

9. The biodegradable polyester resin of claim 1 having a melt viscosity in a range of about 1,000 Pa·s to about 9,000 Pa·s when the melt viscosity is measured by using an Advanced Rheometric Expansion System (ARES) at a temperature of 160°C, a strain of 10%, and a frequency of 0.1 Hz.

10. The biodegradable polyester resin of claim 1 having a storage modulus in a range of about 10 Pa to about 2,200 Pa when the storage modulus is measured by using an Advanced Rheometric Expansion System (ARES) at a temperature of 160°C, a strain of 10%, and a frequency of 0.1 Hz.

11. The biodegradable polyester resin of claim 1 having a polydispersity index in a range of about 2.4 to about 5.0 when the polydispersity index is measured by using gel permeation chromatography (GPC).

12. The biodegradable polyester resin of claim 1 having a foaming ratio in a range of 3 to 20 when extrusion foaming is performed thereon.

13. A foam obtained from the biodegradable polyester resin of any one of claims 1 to 12.

INTERNATIONAL SEARCH REPORT

International application No.
**PCT/KR2014/012166**

A. CLASSIFICATION OF SUBJECT MATTER

***C08G 63/16(2006.01)i, C08G 63/40(2006.01)i, C08G 63/91(2006.01)i, C08J 9/00(2006.01)i, C08G 101/00(2006.01)n***

According to International Patent Classification (IPC) or to both national classification and IPC

B. FIELDS SEARCHED

Minimum documentation searched (classification system followed by classification symbols)

C08G 63/16; C08L 101/16; E04D 3/00; C08L 67/00; C08G 63/02; C08J 5/18; C08J 9/00; C08G 63/40; C08G 63/91; C08G 101/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: dicarboxylic acid, diol, tetra-functional branching agent, biodegradability, polyester resin, pentaerythritol, pyromellitic dianhydride, foam

C. DOCUMENTS CONSIDERED TO BE RELEVANT

| Category* | Citation of document, with indication, where appropriate, of the relevant passages | Relevant to claim No. |
|---|---|---|
| X | US 2005-0059795 A1 (BASTIOLI, C. et al.) 17 March 2005<br>See abstract; claims 1, 18, 27, 28. | 1-5,7-13 |
| Y | | 6 |
| Y | WO 2004-053251 A2 (BP CORPORATION NORTH AMERICA INC.) 24 June 2004<br>See abstract; claim 1; page 8 lines 18-20. | 6 |
| A | | 1-5,7-13 |
| A | KR 10-2014-0076359 A (SAMSUNG FINE CHEMICALS CO., LTD.) 20 June 2014<br>See abstract; claims 1, 4. | 1-13 |
| A | US 6020393 A (KHEMANI, K. C.) 01 February 2000<br>See abstract; claims 1-13. | 1-13 |
| A | KR 10-2007-0015907 A (KIMBERLY-CLARK WORLDWIDE, INC.) 06 February 2007<br>See abstract; claims 1-20. | 1-13 |

☐ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 JULY 2015 (27.07.2015) | **27 JULY 2015 (27.07.2015)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (January 2015)

**INTERNATIONAL SEARCH REPORT**
Information on patent family members

International application No.
**PCT/KR2014/012166**

| Patent document cited in search report | Publication date | Patent family member | Publication date |
|---|---|---|---|
| US 2005-0059795 A1 | 17/03/2005 | AU 2003-239815 A1 | 03/11/2003 |
| | | CA 2481845 A1 | 30/10/2003 |
| | | CA 2481845 C | 13/09/2011 |
| | | CN 1646597 A | 27/07/2005 |
| | | CN 1646597 C | 07/03/2007 |
| | | DE 60302885 T2 | 10/08/2006 |
| | | EP 1497353 A1 | 19/01/2005 |
| | | EP 1497353 B1 | 21/12/2005 |
| | | ES 2256745 T3 | 16/07/2006 |
| | | IT MI20020866 A1 | 22/10/2003 |
| | | IT MI20020866 D0 | 22/04/2002 |
| | | JP 04617083 B2 | 19/01/2011 |
| | | JP 2005-523357 A | 04/08/2005 |
| | | MX PA04010394 A | 17/02/2005 |
| | | TW 200400214 A | 01/01/2004 |
| | | TW 277625 B | 01/04/2007 |
| | | US 7196157 B2 | 27/03/2007 |
| | | WO 03-089493 A1 | 30/10/2003 |
| WO 2004-053251 A2 | 24/06/2004 | AU 2003-297611 A1 | 30/06/2004 |
| | | AU 2003-297611 A8 | 30/06/2004 |
| | | EP 1569990 A2 | 07/09/2005 |
| | | US 2004-109983 A1 | 10/06/2004 |
| | | WO 2004-053251 A3 | 12/08/2004 |
| KR 10-2014-0076359 A | 20/06/2014 | NONE | |
| US 06020393 A | 01/02/2000 | JP 2000-510189 A | 08/08/2000 |
| | | JP 2007-146193 A | 14/06/2007 |
| | | US 05661193 A | 26/08/1997 |
| | | WO 97-43329 A1 | 20/11/1997 |
| KR 10-2007-0015907 A | 06/02/2007 | EP 1725607 A2 | 29/11/2006 |
| | | EP 1725607 B1 | 09/05/2012 |
| | | KR 10-1162383 B1 | 04/07/2012 |
| | | US 2005-0208291 A1 | 22/09/2005 |
| | | US 7153569 B2 | 26/12/2006 |
| | | WO 2005-095515 A2 | 13/10/2005 |
| | | WO 2005-095515 A3 | 12/01/2006 |

Form PCT/ISA/210 (patent family annex) (January 2015)